# EUROPEAN PATENT SPECIFICATION

(11) **EP 1 283 126 B1**
(45) Date of publication and mention of the grant of the patent: **06.12.2006**
(21) Application number: 02255567.6
(22) Date of filing: 08.08.2002
(51) Int. Cl.: B60P 1/48

(54) **Load carrying vehicle**
Lastfahrzeug
Véhicule pour le transport de charges

(30) Priority: 10.08.2001 GB 0119486; 28.05.2002 GB 0212249
(43) Date of publication of application: 12.02.2003
(73) Proprietor: Baker, Andrew Charles, Creeting St May, Ipswich IP6 8PF (GB)
(72) Inventor: Baker, Andrew Charles, Creeting St May, Ipswich IP6 8PF (GB)
(74) Representative: Copp, David Christopher

(56) References cited:
- DE-A- 3 426 310
- FR-A- 1 352 672
- US-A- 6 092 863
- US-A- 6 152 674
- US-A1- 2001 026 752

## Description

This invention relates to a load carrying vehicle such as a forward tipping dumper truck which can be used for a variety of tasks generally concerned with lifting and/or manipulating heavy loads. The invention is particularly useful in relation to rear control vehicles, ie where the driver sits at the rear of the vehicle, behind the load space. Such vehicles are particularly adapted for travelling over varying terrains.

Rear controlled, forward tipping dumper trucks are well known and are used widely on construction sites and on farms, as well as in a number of other applications. They comprise a chassis with two axles/four wheels. The engine is mounted on the rear section of the chassis and the driver sits here and controls the vehicle from this section. The front chassis section carries a dumper bucket or skip which is a large volume bucket which can be loaded by any means and transported in a generally horizontal position. It can be tipped forward on the front chassis section for unloading, using appropriate hydraulic rams. Sometimes such trucks have the front and rear sections articulated to one another by a vertical articulation axis between the sections.

These trucks are very useful for one particular purpose, ie moving and dumping loads which can be conveniently carried in a bucket. However they lack versatility.

Document FR 1352672 discloses a load conveying vehicle according to the preamble of claim 1.

According to the invention, there is provided a load carrying vehicle with a chassis which supports a load platform and which has a frame mounted on the load platform, the frame comprising a base part which can lie flat on the chassis and which is pivotally mounted about a horizontal axis on the chassis, and a back part which is pivotally mounted about a horizontal axis on the base part and which has means at its free end for connection to a separate implement at two spaced apart points, first lifting means adapted to pivot the base part relative to the chassis and second lifting means adapted to pivot the back part relative to the base part.

The spaced apart points are preferably horizontally spaced apart.

The back part preferably comprises two parallel, spaced limbs. The connection means is preferably a hook, but could be any type of easily attachable and detachable connection.

The vehicle may have a front chassis section and a rear chassis section. It may be a forward tipping dumper truck with two mutually articulated chassis sections.

The lifting means are preferably hydraulic cylinders or rams. There may be two first rams to pivot the base part relative to the front chassis section and two second rams to pivot the back part relative to the base part. The cylinders can be fed from a hydraulic pump mounted on the rear chassis section. Such a pump is conventionally provided to feed the cylinders which tip a conventional bucket mounted on the chassis, so all that may be needed is an additional offtake for the cylinders which pivot the back part.

The pump may have additional offtakes, for powering implements lifted onto the frame or attached to the frame.

The vehicle can be self-propelled, and thus can have a motor mounted on the chassis and driving a set of wheels, or can be a towed vehicle, ie a trailer.

The invention also extends to a lifting frame adapted to be mounted on the load platform of a load carrying vehicle, the frame comprising a base part adapted to lie flat on the load platform and which can be pivotally mounted on the load platform about a horizontal axis, and a back part which is pivotally mounted on the base part and which has means at its free end for connection to a separate implement, first lifting means adapted to pivot the base part relative to the load platform and second lifting means adapted to pivot the back part relative to the base part.

The invention will now be further described, by way of example, with reference to the accompanying drawings, in which:
Figure 1 shows a side view of a conventional forward tipping dumper truck;
Figure 2 is a perspective view of a frame for use with a dumper truck in accordance with the invention;
Figure 3 is a side view of the frame in a first position;
Figure 4 is a side view of the frame and a truck on which the frame is mounted, in a second position; and

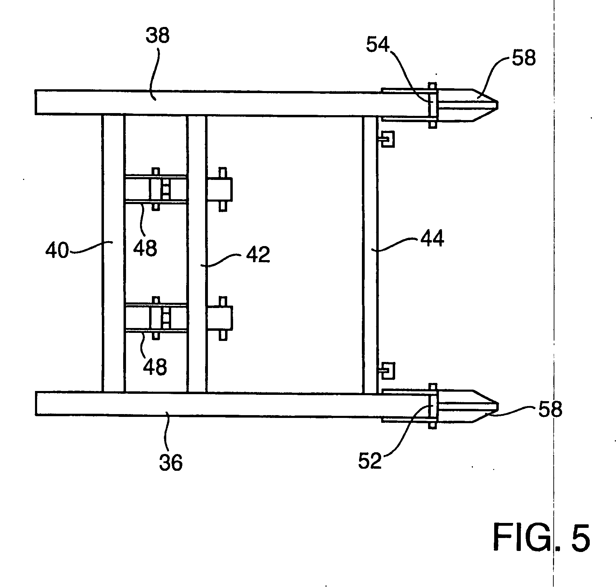

Figure 5 is a plan view of the frame.

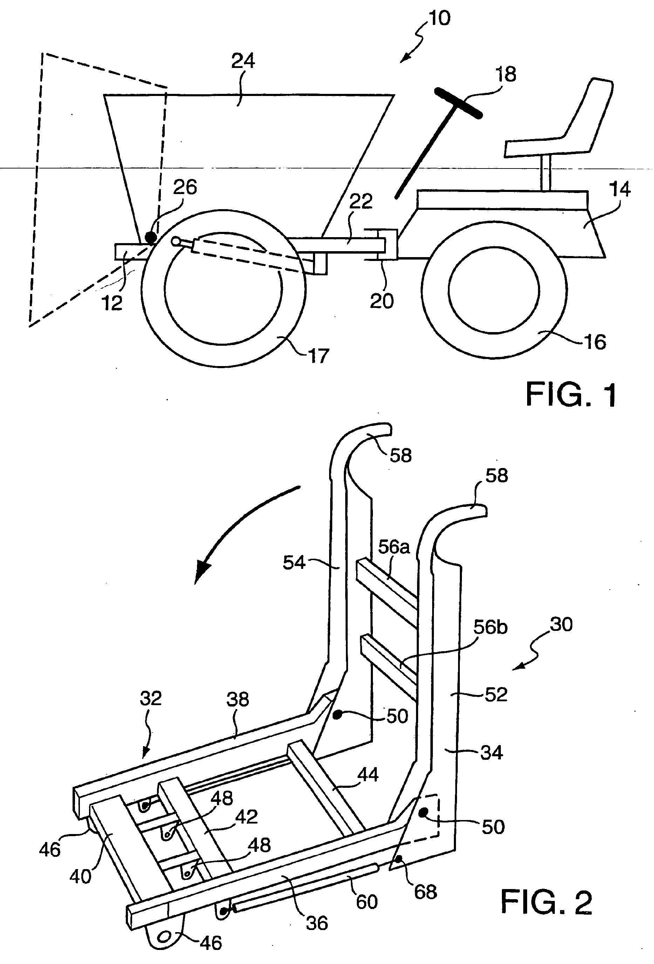

The truck 10 shown in Figure 1 has a front chassis section 12 and a rear chassis section 14. Each section is mounted above a single axle carrying road wheels 16,17. The driver sits on the rear section and controls the truck through a steering wheel 18 and the usual vehicle controls. The engine (not shown) is also mounted on the rear section 14, and drives the wheels 16. In the embodiment shown in Figure 1, the front and rear chassis sections are joined through an articulated link at 20.

On the front section 12, there is a load platform 22. A bucket 24 sits on the platform. A hydraulic cylinder 28 (usually a pair of hydraulic cylinders arranged symmetrically either side of the truck centreline) can be extended to tip the bucket 24 forward, about a pivot axis 26, to the discharging position shown in dotted lines.

Conventionally, the bucket 24 is permanently mounted on the load platform, and the pivot points 26 are permanently installed.

Figure 2 shows a frame 30 which can be mounted on the load platform 22 in place of the bucket 24 and which can enable the truck to undertake a variety of different lifting and manipulating functions.

The frame 30 has a base part 32 and a back part 34. The base part is a generally rectangular framework with two side members 36,38 and transverse beams 40,42,44. The base part 32 will be mounted on the load platform to the same load platform pivot points 26 used for the bucket 24, ie generally over the front axle of the truck, and for this purpose, the base part has pivot lugs 46. The original bucket lifting hydraulic cylinders 28 will be attached to lugs 48 mounted between the two forward beams 40 and 42, so that the base part can be tipped forward by those same cylinders.

At the back of the base part, the back part 34 is mounted on pivot axes 50. The back part comprises two limbs 52,54 connected by transverse beams 56a and 56b. At the end of each limb 52, 54 is a hook 58.
The hooks 58 have a crescent or generally semi-circular form, with a closed end which culminates in a generally right angle bend.

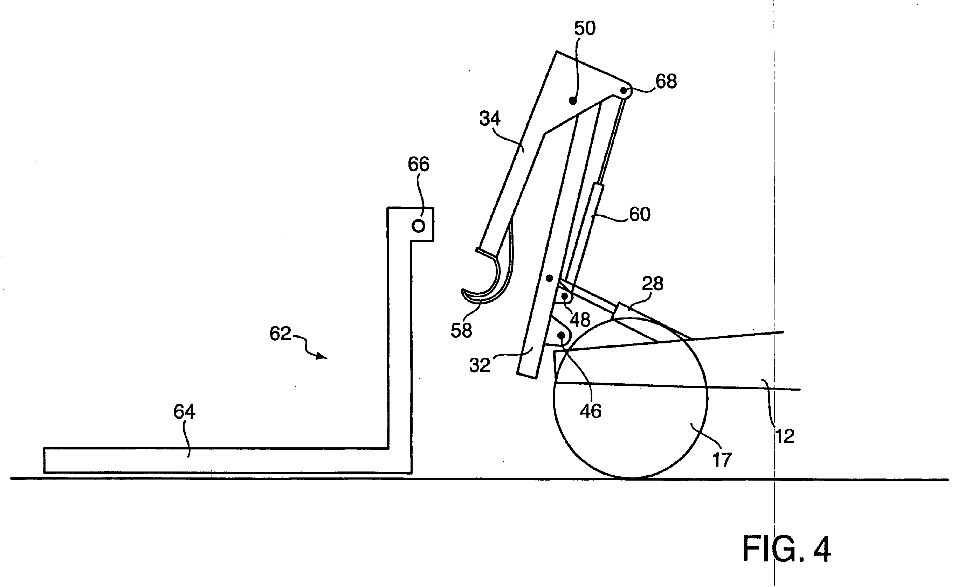

The back part can be moved between two end positions by hydraulic cylinders 60 mounted beneath the side members 36, 38. In one end position, the back part is generally at right angles to the base part (as shown in Figure 2) and in the other end position, the back part lies on top of, and substantially parallel to the base part (Figure 4).

Figure 4 shows the frame in operation. The cylinders 28 have been extended to tip the base part 32 forward, and the cylinders 60 have also been extended to lower the back part over the base part. The result is that the hooks 58 are presented at the front of the truck where they can engage with lifting eyes or the like at the front of an implement, to pick up the implement. It is advantageous if the hooks are such that they can be engaged with the implement by manipulation of the hydraulic rams to position the back part relative to the implement without the driver needing to dismount from the vehicle. However it is within the scope of the invention for this connection to be made by other means, including means which require direct operator intervention, eg to put a pin through aligned holes on brackets on the back part and on the implement. In another alternative, the free ends of the back part limbs may carry chains which can be connected to the implement.

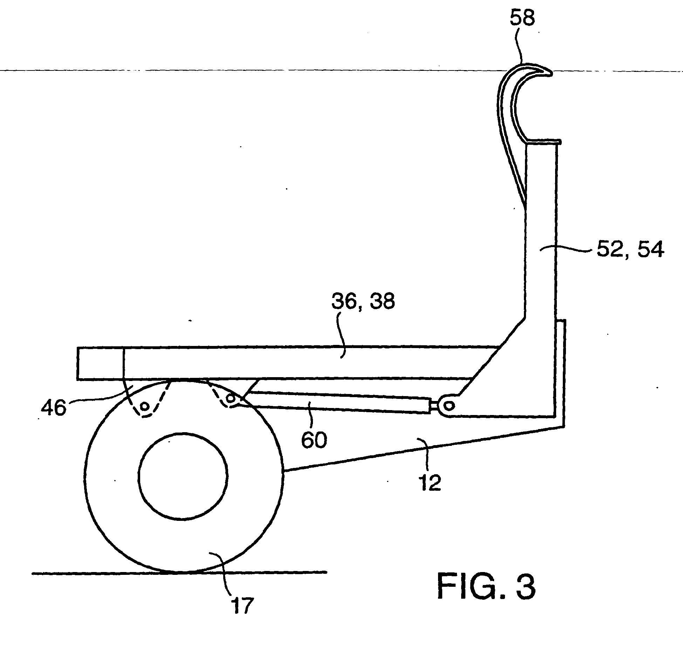

Figure 4 also shows schematically one such implement in the form of a multi-purpose carrier 62 which has a load bed 64, and pick-up points at 66. The truck is then manoeuvred so that the hooks 58 engage in the pick-up points 66. By retracting all the cylinders 28 and 60 the front edge of the carrier 62 is lifted, and is then drawn onto the base part 32 which returns to its original horizontal configuration (Figure 3). The carrier is then wholly carried on the truck and can be transported by the truck to a different location where it is to be set down. Setting down is a reversal of the procedure for picking up.

The design of the hooks 58 is important to make sure that (a) they can engage under the pick-up points of the implement to be picked up (b) they can retain the implement on the truck when the truck is moving and when the back part is vertical, and (c) they can provide a pushing force to push the implement off the truck when setting down. Once an implement has been loaded onto the truck, a retaining pin may be provided to prevent unintended unloading of the implement.

The term 'implement' is used in this specification to refer to the various objects or attachments which can be picked up by the frame 30. A very wide variety of implements can be used with the truck and frame described here. Examples of such implements are:
Bucket/Skip
Multi-purpose carrier
Fork-lift unit
Telescopic loader
Fixed Boom handler
Personnel hoist/platform
Mini digger/Back Actor
Winch
Fuel or water bowser
Pressure washer
Generator
Bale carrier
Concrete mixer
Compressor
Trenching machine
Animal feed dispenser
Livestock carrier (and ramp)
Timber pick-up
Basket
Rocking cradle skip
Implements or attachments which themselves have wheels
Stabiliser legs (may be used when another implement is also in use)

It will be appreciated that at least some of these implements will require a power supply (eg hydraulic or electrical) for their operation. Dumper trucks conventionally have a hydraulic pump, and the vehicle of the invention can have an additional hydraulic supply feed to which any particular implement can be connected. Alternatively the vehicle or the implement can be provided with a separate power supply.

The back part 34 of the frame is shown with two limbs and two hooks. It may also be possible to use a single, central hook, with the back part of the frame having an appropriate configuration, such as an A-frame.

The points of attachment of the rams 28 should be positioned on the chassis at points as far from the front end of the chassis as possible and on the base part also as far from the front end as possible. The points of attachment of the rams 60 should be positioned on the underside of the base part at a point near to the front end and to the back part at a point below and in front of the pivot axis between the back and base parts.

The position of the pivot point 50 between the base part and the back part, in relation to the point of attachment 68 of the hydraulic cylinder is most effective when the point 68 is in front of the pivot axes 50 when the base part is horizontal and the back part is vertical.

The implements may locate on the base part by having lateral lugs or flanges which engage either side of the side members 36, 38 to prevent side to side movement of the implement on the frame. Alternatively the implements and the side members may have matching, interengaging profiles, or one part may have a projecting part which engages in a recess in the other part.

The ends of the side members 36,38 may be open so that other implements can be inserted in the side members. As an example, spikes or tines for lifting bales could be attached in this way. Similarly, implements can be attached to the back part 34 and/or to the hooks 58 in order that the base part and the back part of the frame can grip items such as bales or timber.

Rollers (not shown) may be fitted at the front end of the base part 30, to assist in dragging an implement onto the base part.

Stabilisers may be fitted to the base part, or to the vehicle, to ensure safe operation in certain operating conditions.

Although the invention has been described here in relation to a forward tipping dumper truck, the same principles of construction can be used when the invention is applied to a very wide variety of other vehicle types, eg a non-powered, towed trailer, a flat bed, forward controlled truck (for example a JCB Fastrac^{™} or Mercedes Benz Unimog^{™}) or a track laying vehicle or can be used mounted on the front or rear of an agricultural tractor.

## Claims

1. A load carrying vehicle with mutually articulated front and rear chassis sections (12,14), wherein the front chassis section (12) supports a load platform (22) and has a frame (30) mounted on the load platform, **characterised in that** the frame (30) comprises a base part (32) which can lie flat on the chassis and which is pivotally mounted about a horizontal axis on the chassis, and a back part (34) which is pivotally mounted about a horizontal axis (50) on the base part and which has hooks (58) at its free end for connection to a separate implement at two spaced apart points, first lifting means (28) adapted to pivot the base part (32) relative to the chassis (12) and second lifting means (60) adapted to pivot the back part (34) relative to the base part (32), the second lifting means (60) being located below the base part (32).

2. A vehicle as claimed in Claim 1, wherein the spaced apart points are horizontally spaced apart.

3. A vehicle as claimed in Claim 1 or Claim 2, wherein the back part (34) comprises two parallel, spaced limbs (52,54).

4. A vehicle as claimed in any preceding claim, wherein the lifting means (28,60) are hydraulic cylinders.

5. A vehicle as claimed in Claim 4, wherein there are two first cylinders (28) to pivot the base part (32) relative to the front chassis section (12) and two second cylinders (60) to pivot the back part (34)relative to the base part (32).

6. A vehicle as claimed in Claim 4 or Claim 5, wherein the cylinders (28,60) are fed from a hydraulic pump mounted on the rear chassis section (14).

7. A vehicle as claimed in Claim 6, wherein the pump has additional offtakes, for powering implements lifted onto the frame or attached to the frame.

## Patentansprüche

1. Lastbeförderndes Fahrzeug mit gegenseitig durch ein Gelenk verbundenen vorderen und hinteren Fahrgestellabschnitten (12, 14), wobei der vordere Fahrgestellabschnitt (12) eine Lastplatform (22) trägt und einen Rahmen (30) hat, der auf der Lastplattform angebracht ist,
**dadurch gekennzeichnet, dass** der Rahmen (30) umfasst:
ein Unterteil (32), das flach auf dem Fahrgestell liegen kann und das um eine horizontale Achse drehbar auf dem Fahrgestell befestigt ist, und
ein hinteres Teil (34), das um eine horizontale Achse (50) drehbar auf dem Unterteil befestigt ist, und das an seinem freien Ende Haken (58) zur Verbindung mit einem separaten Gerät an zwei beabstandeten Punkten hat,
erste Anhebemittel (28), die ausgestaltet sind, um das Unterteil (32) relativ zu dem Fahrgestell (12) zu drehen, und
zweite Anhebemittel (60), die ausgestaltet sind, um das hintere Teil (34) relativ zu dem Unterteil (32) zu drehen, wobei die zweiten Anhebemittel (60) unterhalb des Unterteils (32) angeordnet sind.

2. Fahrzeug nach Anspruch 1, wobei die beabstandeten Punkte horizontal voneinander beabstandet sind.

3. Fahrzeug nach Anspruch 1 oder 2, wobei das hintere Teil (34) zwei parallele, räumlich voneinander getrennte Glieder (52, 54) aufweist.

4. Fahrzeug nach einem der vorangehenden Ansprüche, wobei die Anhebemittel (28, 60) hydraulische Zylinder sind.

5. Fahrzeug nach Anspruch 4, wobei es zwei erste Zylinder (28) gibt, um das Unterteil (32) relativ zu dem vorderen Fahrgestellabschnitt (12) zu drehen und zwei zweite Zylinder (60), um das hintere Teil (34) relativ zu dem Unterteil (32) zu drehen.

6. Fahrzeug nach Anspruch 4 oder 5, wobei die Zylinder (28, 60) von einer hydraulischen Pumpe versorgt werden, die auf dem hinteren Fahrgestellabschnitt (14) montiert ist.

7. Fahrzeug nach Anspruch 6, wobei die Pumpe zusätzliche Ableitungen hat, um Geräte anzutreiben, die auf den Rahmen gehoben oder an dem Rahmen befestigt sind.

## Revendications

1. Véhicule pour le transport de charge muni de sections avant et arrière de châssis mutuellement articulées (12, 14), dans lequel la section avant de châssis (12) supporte une plate-forme de charge (22) et a un cadre (30) monté sur la plate-forme de charge, **caractérisé en ce que** le cadre (30) comprend une partie de base (32) qui peut reposer à plat sur le châssis et qui est montée de manière pivotante autour d'un axe horizontal sur le châssis, et une partie arrière (34) qui est montée de manière pivotante autour d'un axe horizontal (50) sur la partie de base et qui comporte des crochets (58) à son extrémité libre pour le raccordement à un accessoire indépendant en deux points distants, un premier moyen de levage (28) conçu pour faire pivoter la partie de base (32) par rapport au châssis (12) et un deuxième moyen de levage (60) conçu pour faire pivoter la partie arrière (34) par rapport à la partie de base (32), le deuxième moyen de levage (60) étant situé en dessous de la partie de base (32).

2. Véhicule selon la revendication 1, dans lequel les points distants sont espacés horizontalement.

3. Véhicule selon la revendication 1 ou 2, dans lequel la partie arrière (34) comprend deux branches (52, 54) parallèles et distantes.

4. Véhicule selon l'une quelconque des revendications précédentes, dans lequel les moyens de levage (28, 60) sont des vérins hydrauliques.

5. Véhicule selon la revendication 4, dans lequel il y a deux premiers vérins (28) pour faire pivoter la partie de base (32) par rapport à la section avant de châssis (12) et deux vérins (60) pour faire pivoter la partie arrière (34) par rapport à la partie de base (32).

6. Véhicule selon la revendication 4 ou 5, dans lequel les vérins (28, 60) sont alimentés par une pompe hydraulique montée sur la section arrière de châssis (14).

7. Véhicule selon la revendication 6, dans lequel la pompe a des orifices supplémentaires de sortie pour actionner des accessoires levés sur le cadre ou fixés au cadre.
